# EUROPÄISCHE PATENTANMELDUNG

(11) **EP 2 810 900 A1**
(43) Veröffentlichungstag der Anmeldung: **10.12.2014**
(21) Anmeldenummer: 14171095.4
(22) Anmeldetag: 04.06.2014
(51) Int. Cl.: B65G 47/90, B25J 5/02, B25J 9/10

(54) **Vorrichtung zum Transport**

(30) Priorität: 04.06.2013 DE 102013210372
(71) Anmelder: Roche Diagnostics GmbH, 68305 Mannheim (DE); F. Hoffmann-La Roche AG, 4070 Basel (CH)
(72) Erfinder: Pedain, Dr. Christoph, 71334 Waiblingen (DE); Wilhelm, Timo, 71636 Ludwigsburg (DE)
(74) Vertreter: Patentanwälte Ruff, Wilhelm, Beier, Dauster & Partner

(57) **Zusammenfassung**

Eine Vorrichtung wird vorgeschlagen, mit der einzelne Probenbehälter von einer Startposition zu einer Zielposition befördert werden können, wobei die Rolle von Startposition und Zielposition vertauschbar ist. Die Bewegung eines Greifers ist eine kombinierte Hubbewegung und Translationsbewegung. Der Greifer wird mithilfe eines einfachen Antriebs eine Bewegungsbahn entlang bewegt, die mechanisch definiert ist.

## Beschreibung

Die Erfindung betrifft eine Vorrichtung, mit deren Hilfe ein Probenbehälter oder ein ähnlicher Behälter aus einem Probenbehälterträger an einer ersten Stelle entnommen, zu einem Probenbehälterträger an einer anderen Stelle transportiert und dort abgesetzt werden kann. Die erste Stelle soll im Folgenden als Startposition und die andere Stelle als Zielposition bezeichnet werden.

Bei dieser Art der Bewegung ist sowohl bei der Entnahme aus dem Probenbehälterträger als auch bei dem Absetzen eine vertikale Bewegungskomponente erforderlich.

Es ist bereits eine Vorrichtung der eingangs genannten Art bekannt, bei der ein Greifer, der Behälter ergreifen und loslassen kann, dreidimensional bewegt werden kann. Der Greifer kann in der Vertikalen angehoben und mithilfe eines Portals in einer Ebene beliebig bewegt werden. Hierzu werden mindestens drei Motoren benötigt (US 6919044 B1).

Ein Greifer, der Behälter in Form von Röhrchen ergreifen kann, ist ebenfalls bekannt (US 5775755 A, US 7128874 B2).

Der mechanische und apparative Aufwand bei der bekannten Vorrichtung ist relativ groß, ebenso die Zahl der Fehlermöglichkeiten.

Der Erfindung liegt die Aufgabe zu Grunde, eine Vorrichtung der eingangs genannten Art zu schaffen, die sich mit geringerem Aufwand verwirklichen lässt.

Zur Lösung dieser Aufgabe schlägt die Erfindung eine Vorrichtung mit den im Anspruch 1 genannten Merkmalen vor. Weiterbildungen der Erfindung sind Gegenstand von Unteransprüchen.

Die Vorrichtung dient zur Übergabe und zum Transport von Probenbehältern von einer Startposition zu einer Zielposition.

Die Vorrichtung nach der Erfindung verwendet einen Greifer, der die Probe bzw. den Probenbehälter, beispielsweise in Form eines Probenröhrchens, ergreifen und natürlich auch wieder loslassen kann.

Der Greifer ist an einer Greiferhalterung angebracht, die mithilfe eines Antriebs entlang einer definierten Bewegungsbahn bzw. eines definierten Bewegungswegs bewegt werden kann.

Ein Bewegungsbahnfestlegungsmittel ist mechanisch mit der Greiferhalterung gekoppelt und legt die Bewegungsbahn der Greiferhalterung und somit auch des Greifers mechanisch fest, wobei die Bewegungsbahn horizontale und vertikale Komponenten aufweisen kann. Die Bewegungsbahn kann eine beliebig geformte Linie im Raum sein. Die Bewegungsbahn wird mittels des Bewegungsbahnfestlegungsmittels derart bestimmt, dass der Greifer bei einer Bewegung entlang der Bewegungsbahn von der Startposition zur Zielposition bewegt wird.

Erfindungsgemäß ist nur ein einziger, beispielsweise elektrischer, Antrieb erforderlich, um beliebige Verfahrprofile entlang der Bewegungsbahn mit vertikalen und horizontalen Komponenten zu realisieren.

In Weiterbildung der Erfindung kann vorgesehen sein, dass die Bewegungsbahn nur einen einzigen Freiheitsgrad aufweist. Die Bewegungsbahn ist basierend auf der konstruktiven Ausgestaltung des Bewegungsbahnfestlegungsmittels derart bestimmt bzw. festgelegt, dass bei einer Bewegung der Greiferhalterung entlang der Bewegungsbahn der Greifer von der Startposition zu der Zielposition bewegt wird. Bei einer eindeutigen Startposition und einer eindeutigen Zielposition reicht ein einzelner Freiheitsgrad aus. Die Bewegungsbahn kann beispielsweise eine beliebig gekrümmte Linie im Raum sein.

In weiterer Ausgestaltung der Erfindung kann vorgesehen sein, dass der Greiferhalterungsantrieb einen einzigen Elektromotor aufweist. Dadurch verringern sich nicht nur die Kosten für die Herstellung einer solchen Vorrichtung, sondern vor allen Dingen auch die Wartungskosten und die Reparaturkosten. Auch die Zahl der Fehlermöglichkeiten verringert sich.

In Weiterbildung können Greiferbetätigungsmittel vorgesehen sein, die eine durch die Bewegung der Greiferhalterung hervorgerufene Zwangssteuerung für die Betätigung des Greifers bewirken. Diese Zwangssteuerung kann dadurch ausgelöst oder betätigt werden, dass die Greiferhalterung und damit der Greifer bei seiner Bewegung die Startposition oder die Zielposition erreicht. Wenn beispielsweise der Greifer im leeren Zustand zu einem Probenbehälter bewegt wird, kann er geöffnet sein. Sobald er die Startposition für die Bewegung des Probenbehälters erreicht, kann er durch die Zwangssteuerung geschlossen werden. Damit ergreift er den Probenbehälter.

Erreicht er dagegen zusammen mit einem Probenbehälter die Zielposition, kann die Zwangssteuerung ihn bei Erreichen der Zielposition öffnen. Damit lässt er den Probenbehälter los.

Es ist aber ebenfalls möglich und wird von der Erfindung vorgeschlagen, dass die Vorrichtung einen eigenen Mechanismus für die Betätigung des Greifers aufweist, beispielsweise einen eigenen elektrischen Antrieb.

Es wurde bereits erwähnt, dass die Bewegung, die der Greifer ausführt, sich aus einer vertikalen Hubbewegung und einer horizontalen Translationsbewegung zusammensetzen kann. In Weiterbildung kann nun vorgesehen sein, dass die Bewegungsbahnfestlegungsmittel derart mechanisch ausgebildet sind, dass die Bewegungsbahn an mindestens einem ihrer Enden einen Abschnitt aufweist, der eine vertikale Hubbewegung bewirkt. Dadurch kann erreicht werden, dass der Greifer an der Startposition und/oder an der Zielposition eine rein vertikale Bewegung ausführt. Diese kann erforderlich sein, um einen Probenbehälter aus einem Probenbehälterträger herauszuheben oder in einen Probenbehälterträger einzusetzen.

Es ist aber ebenfalls möglich und wird von der Erfindung vorgeschlagen, dass die Bewegungsbahnfestlegungsmittel derart mechanisch ausgebildet sind, dass die Bewegungsbahn an mindestens einem ihrer Enden eine horizontale Bewegungskomponente aufweist. Diese Art der Ausbildung erleichtert den Antrieb und ist dann möglich, wenn entweder zum Herausheben des Probenbehälters aus dem Probenbehälterträger bzw. zu seinem Absetzen eine nur sehr kurze vertikale Komponente erforderlich ist oder auf andere Weise dafür gesorgt wird, dass das Absetzen oder Herausnehmen möglich wird.

Insbesondere kann zu diesem Zweck vorgesehen sein, dass die Vorrichtung einen Antrieb zur kurzhubigen Bewegung bzw. Veränderung der Startposition und/oder der Zielposition der Probe bzw. des Probenbehälter aufweist. Unter kurzhubig ist dabei zu verstehen, dass die Bewegungsmöglichkeit im Verhältnis zu der eigentlichen Bewegungsbahn sehr klein ist. Die Bewegung muss gerade so weit erfolgen, dass das Herausheben des Probenbehälters aus dem Probenbehälterträger bzw. das Absetzen in den Probenbehälterträger ermöglicht wird.

Die Bewegungsmöglichkeit ist dabei sinnvollerweise in der gleichen Richtung gegeben, in der die Transportbewegung erfolgt.

Die Bewegungsbahnfestlegungsmittel können auch derart mechanisch ausgebildet sein, dass die Bewegungsbahn ausschließlich vertikale oder horizontale Komponenten aufweist, d.h. dass eine rein vertikale oder rein horizontale Bewegung des Probenbehälters bewirkt wird.

In weiterer Ausgestaltung der Erfindung können die Bewegungsbahnfestlegungsmittel durch eine Führungsschiene verwirklicht sein, längs der sich die Greiferhalterung für den Greifer mithilfe von Rollen, Walzen oder dergleichen fortbewegt.

Die Führungsschiene kann dabei auch als Zahnstange oder als Stator eines Linearmotors verwirklicht sein.

Eine weitere von der Erfindung vorgeschlagene Möglichkeit zur Realisierung des Bewegungsbahnfestlegungsmittels liegt darin, dass die Bewegung durch eine Vorrichtung von mechanisch gekoppelten Lenkern verwirklicht wird.

Die Vorrichtung zur Übergabe und zum Transport von Probenbehältern von einer Startposition zu einer Zielposition kann einen Greifer aufweisen, der dazu ausgebildet ist, den Probenbehälter zu greifen.

Weiter kann eine Greiferhalterung vorgesehen sein, die dazu ausgebildet ist, den Greifer zu halten.

Weiter kann die Vorrichtung eine Bewegungsbahn für den Probenbehälter aufweisen, wobei der (zu greifende) Probenbehälter eine horizontale Projektion der Bewegungs-Freiheitsgrade aufweist, welche die Greiferhalterung ausführen kann. Auf diese Weise kann der Probenbehälter in der Ebene bzw. horizontal der bewegten Greiferhalterung entlang deren horizontalen Bewegungs-Freiheitsgraden folgen.

Die Bewegungsbahn kann eine Sensorik aufweisen, die die Position des Probenbehälters feststellen kann. Während einer Bewegung des Probenbehälters, die durch die Bewegung der Greiferhalterung induziert wird, kann die Sensorik ausgelesen werden.

Die Bewegungsbahn kann dazu ausgebildet sein, den Probenbehälter aktiv zu bewegen.

Die Bewegungsbahn kann derart geschaltet sein, dass keine horizontal gerichtete Kraft auf den Probenbehälter ausgeübt wird.

Die Bewegungsbahn kann derart ausgebildet sein, dass auf den Probenbehälter eine vertikale Kraft ausgeübt wird.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Fig. 1: stark schematisiert die Vorrichtung nach einem 1. Ausführungsbeispiel der Erfindung;
- Fig. 2: ebenfalls stark schematisiert die Verwirklichung einer Bewegungsbahn nach einer 2. Ausführungsform der Erfindung;
- Fig. 3: eine der Figur 1 entsprechende dieser gegenüber abgewandelte Ausführungsform und
- Fig. 4: stark vereinfacht ein Ende einer Zahnstange zur Verwirklichung der Bewegungsbahn einer erfindungsgemäßen Vorrichtung.

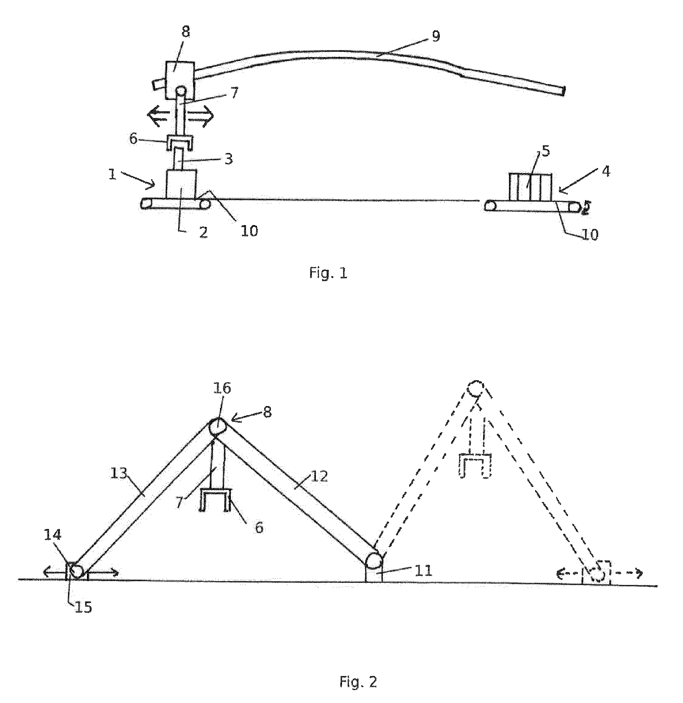

In Figur 1 ist stark schematisiert dargestellt, wie eine Vorrichtung nach der Erfindung aufgebaut ist und wie sie verwendet wird. In der links dargestellten Startposition 1 ist ein Probenbehälterträger 2 vorgesehen. In den Probenbehälterträger 2 ist ein Probenbehälter 3 (beispielsweise in Form eines Probenröhrchens) eingesetzt. Rechts in Figur 1 ist die Zielposition 4 dargestellt, auf der ebenfalls ein Probenbehälterträger 5 vorgesehen ist. Der Probenbehälterträger 5 kann zur Aufnahme mehrerer Probenbehälter 3 dienen und beispielsweise als so genanntes Rack verkörpert sein. Die Vorrichtung nach der Erfindung soll nun einen Probenbehälter 3 aus dem in der Startposition 1 vorgesehenen Probenbehälterträger 2 in den Probenbehälterträger 5 in der Zielposition 4 transportieren. Sie soll natürlich auch in der Lage sein, einen Probenbehälter 3 aus der Zielposition, die dann zur Startposition wird, zurück in die Startposition zu bringen, die dann zur Zielposition wird.

Die Vorrichtung enthält einen Greifer 6. Der Greifer 6 ist schematisch dargestellt. Er ist in der Lage, einen Probenbehälter 3 festzuhalten und freizugeben. Der Greifer 6 ist pendelnd mithilfe einer Stange 7 an einer Greiferhalterung 8 aufgehängt. Die Greiferhalterung 8 ist mit einer Führung an einem Bewegungsbahnfestlegungsmittel in Form einer Schiene 9 geführt und kann die Schiene 9 entlang verschoben werden. Dies kann mithilfe von Rollen, Rädern, Walzen oder dergleichen geschehen. Die Schiene 9 weist in ihrem der Startposition 1 zugeordneten Endbereich einen schräg nach oben gerichteten Verlauf auf, also sowohl eine horizontale als auch eine vertikale Verlaufskomponente. Die Schiene 9 ist ortsfest angeordnet und geht in einem flachen Bogen bis zu ihrem der Zielposition 4 zugeordneten zweiten Ende, wo sie ebenfalls einen schrägen Verlauf einnimmt. Die Schiene 9 definiert also eine Bewegungsbahn für die Greiferhalterung 8.

Die Vorrichtung enthält einen nicht dargestellten elektrischen Antrieb, der in der Lage ist, die Greiferhalterung 8 und damit den an ihr aufgehängten Greifer 6 entlang der Scheine 9 zu verschieben. Dies könnte beispielsweise ein mit einem Elektromotor gekoppelter Seilzug sein, der an der Greiferhalterung 8 angreift. Die Bewegungsmöglichkeit des Antriebs ist durch den Doppelpfeil dargestellt. Wird nun der Antrieb in Gang gesetzt, ausgehend von der Position 1 der Figur 1, so wird der Greifer 6 in einer nach oben und nach rechts gerichteten Bewegung verschoben, bis er schließlich am zweiten Ende der Schiene 9 wieder abgesenkt wird.

Der Greifer 6 hat zwei stabile Zustände, nämlich einen geöffnetem Zustand und einen geschlossenen Zustand. Im geschlossenen Zustand hält er den Probenbehälter 3 fest, in geöffnetem Zustand ist der Probenbehälter 3 freigegeben. Zum Transport des Probenbehälters 3, ausgehend von der Position 1 der Figur 1, schließt der Greifer und ergreift damit den Probenbehälter 3. Er wird dann durch den Antrieb nach rechts bewegt, bis er in seine Endposition gelangt. In der Endposition wird durch eine Zwangssteuerung der Greifer 6 geöffnet. Damit wird der Probenbehälter 3 freigegeben.

Da der Probenbehälterträger 2 bzw. 5 den Probenbehälter auch seitlich abstützt, und da sowohl in der Startposition 1 als auch in der Zielposition 4 eine horizontale Bewegungskomponente des Greifers 6 gegeben ist, kann zum Ausgleich dieser horizontalen Bewegungskomponente der Probenbehälterträger 2 bzw. 5 der horizontalen Bewegung des Greifers 6 um einen kurzen Betrag folgen. Zu diesem Zweck sind beispielsweise die beiden Probenbehälterträger 2 und 5 auf einer Plattform 10 angeordnet, die eine kurzhubige Bewegung in Transportrichtung ausführen kann. Angedeutet ist dies in der Figur 1 durch ein kurzes Transportband. Damit kann der jeweilige Probenbehälterträger 2, 5 in der Transportrichtung um eine kurze Strecke verschoben werden.

Die Figur 2 zeigt eine zweite Ausführungsform einer Vorrichtung nach der Erfindung mit einer geänderten Art der Bewegungssteuerung. An einem ortsfesten Widerlager 11 ist ein erster Lenker 12 um eine horizontale Achse schwenkbar gelagert. An seinem dem Widerlager 11 abgewandten Ende ist der Lenker 12 mit einem zweiten Lenker 13 ebenfalls um eine horizontale Achse schwenkbar verbunden. Der zweite Lenker 13 weist in der dargestellten Ausführungsform die gleiche Länge auf wie der erste Lenker 12.

Das freie Ende 14 des zweiten Lenkers 13 ist dann mit einem Antriebslager 15 schwenkbar verbunden. Das Antriebslager 15 ist in der Ebene, auf der das Widerlager 11 angeordnet ist, linear verschiebbar geführt und mit einem Antrieb versehen, der dieses Antriebslager 15 linear in beide Richtungen verschieben kann. Die Verschiebbarkeit geht auch über das Widerlager 11 hinaus. Dies kann dadurch erreicht werden, dass das Antriebslager 15 hinter der Ebene angeordnet ist, in der das Widerlager 11 steht.

An einer Verbindungsstelle 16 zwischen den beiden Lenkern 12 und 13 ist die Greiferhalterung 8 ausgebildet, an der über die Verbindungsstange 7 der Greifer 6 aufgehängt ist. Bei einer Verschiebung des Antriebslagers 15 in Richtung der angezeigten Pfeile führt der Greifer 6 eine Bewegung aus, die einem Kreisbogen entspricht. Dadurch kann der Greifer 6 und mit ihm ein Probenbehälter 3 von einer Startposition in eine Zielposition übergeben werden.

In Figur 2 ist gestrichelt die Position der beiden Lenker 12, 13 dargestellt, die dann eingenommen wird, wenn das Antriebslager 15 über das feste Widerlager 11 hinaus nach rechts verschoben wird.

Da auch bei der Vorrichtung der Figur 2 der Greifer 6 in der Startposition und in der Zielposition eine Bewegung mit einer horizontalen Komponente ausführt, kann auch bei der Vorrichtung der Figur 2 ein Ausgleich mithilfe der Verschiebbarkeit der die Probenbehälter 3 aufnehmenden Probenbehälterträger 2, 5 geschehen.

Bei der Ausführungsform der Figur 2 könnte ein solcher Ausgleich auch dadurch geschehen, dass das an sich feste Widerlager 11 diese kurzhubige Bewegung ausführen kann.

Bei der Ausführungsform der Figur 2 ist es ebenfalls möglich, die ortsfeste Lagerung des ersten Lenkers 12 in dem Widerlager 11 höher anzuordnen, d.h. mit größerem Abstand von der Ebene, auf der die Probenbehälter 2, 5 stehen. Wenn der Abstand der Lagerungsachse in dem ortsfesten Widerlager 11 und die Länge der den Greifer 6 mit der Greiferhalterung 8 verbindenden Stange 7 so aufeinander abgestimmt sind, dass in der Aufnahmeposition des Greifers 6 für den entsprechenden Probenbehälter 2, 5 der Lenker 12 waagrecht verläuft, beginnt die Bewegung des Greifers 6 mit einer ausschließlich vertikalen Bewegungskomponente. Dann ist ein entsprechender Ausgleich durch eine kurzhubige Horizontalbewegung der Probenbehälterträger 2, 5 oder des Widerlagers 11 nicht erforderlich.

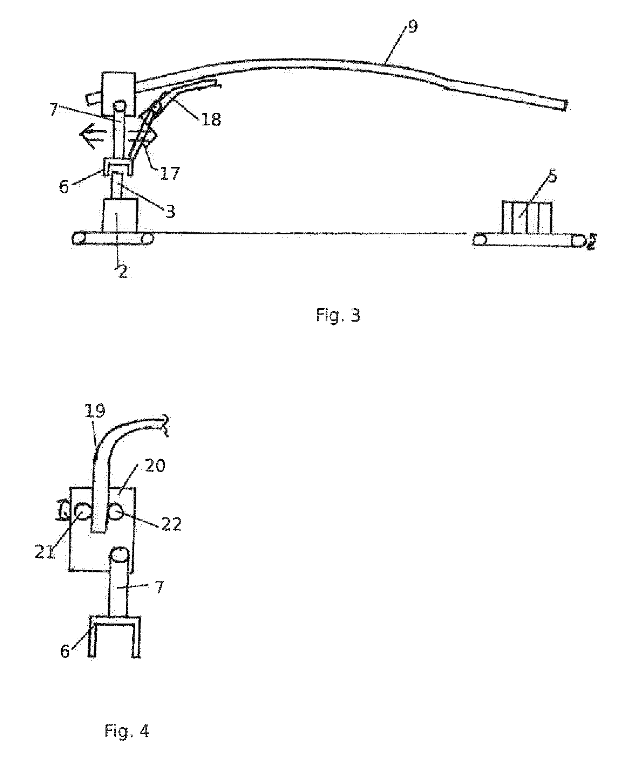

Die Figur 3 zeigt eine gegenüber Figur 1 leicht abgeänderte Ausführungsform. Hier ist zur Steuerung des Greifers 6 ein Lenker 17 vorgesehen, der mit einer eigenen Führungsschiene 18 zusammenwirkt. Diese Führungsschiene 18 hat einen anderen Verlauf als die Schiene 9. Sie soll dazu dienen, bei Erreichen der Startposition 1 bzw. Zielposition 4 den Greifer 6 zu betätigen. Da der Greifer 6 je nach Zustand geöffnet bzw. geschlossen werden soll, und die Startposition 1 und Zielposition 4 wegen des Transports in beide Richtungen austauschbar sind, kann die unterschiedliche Steuerung des Greifers beispielsweise über eine Weiche in der Führungsschiene 18 erreicht werden.

Beispielsweise kann die Führungsschiene 18 für den Lenker 17 zur Betätigung des Greifers oder eines Teils des Greifers über den größten Teil ihres Verlaufs parallel zu der Schiene 9 verlaufen und nur in dem Endbereich, wo eine Einflussnahme auf die Steuerung des Greifers 6 gewünscht ist, einen abweichenden Verlauf einnehmen. Da der mechanisch definierten Bewegungsbahn, in diesem Fall festgelegt mittels der Schiene 9, eine bestimmten Startposition und eine bestimmten Zielposition direkt zugeordnet ist, kann auch eine direkte mechanische Steuerung als Zwangssteuerung für die Betätigung des Greifers 6 verwendet werden.

In den Figuren 1 - 3 sind die Probenbehälterträger 2, 5 in einer Ebene dargestellt. Die von der Erfindung vorgeschlagene Vorrichtung kann aber auch dazu verwendet werden, Proben bzw. Probenbehälter aus einer Startposition in eine Zielposition zu übergeben, wenn beide nicht in der gleichen Höhe, sondern auf unterschiedlichem Höhenniveau angeordnet sind.

Es können auch Greifer bewegt werden, die mehr als einen Probenbehälter 3 ergreifen und transportieren können.

Die Figur 4 zeigt nun eine Einzelheit, nämlich ein Ende einer Führungsschiene, die hier als Zahnstange 19 ausgebildet ist. Die Zahnstange 19 hat beispielsweise auf der in Figur 4 linken und oberen Seite eine Verzahnung, während sie auf der gegenüberliegenden Seite glatt ausgebildet ist. Die Greiferhalterung 20 weist ein Zahnrad 21 auf, das mit der Verzahnung der Zahnstange 19 in Eingriff steht. Auf der gegenüberliegenden Seite ist ein Andrückrad 22 drehbar angeordnet, so dass die Zahnstange 19 zwischen dem Zahnrad 21 einerseits und dem Andrückrad 22 der Greiferhalterung 20 andererseits hindurchgeht. Auf diese Weise ist die Greiferhalterung 20 an der Zahnstange 19 festgelegt. Zum Antrieb kann daher ein Elektromotor dienen, der das Zahnrad 21 drehend antreibt. Dies ist ebenfalls eine Möglichkeit, bei der das Ende der Bewegungsbahn vertikal ausgebildet ist.

Die Erfindung ermöglicht es, einzelne oder mehrere Probenbehälter von einer Startposition zu einer Zielposition zu transportieren, wobei die Rolle von Startposition und Zielposition vertauschbar ist. Die Bewegung eines Greifers ist eine kombinierte Hubbewegung und Translationsbewegung. Der Greifer wird mithilfe eines einfachen Antriebs eine Bewegungsbahn entlang bewegt, die mechanisch definiert ist.

## Patentansprüche

1. Vorrichtung zur Übergabe und zum Transport von Proben behältern (3) von einer Startposition (1) zu einer Zielposition (4), mit
- einem Greifer (6), der dazu ausgebildet ist, den Probenbehälter (3) zu greifen,
- einer Greiferhalterung (8, 20), die dazu ausgebildet ist, den Greifer (6) zu halten,
- einem Bewegungsbahnfestlegungsmittel (9), das derart mechanisch mit der Greiferhalterung (8, 20) wechselwirkt, dass sich die Greiferhalterung (8, 20) bei einer Bewegung entlang einer definierten Bewegungsbahn bewegt, und
- einem Greiferhalterungsantrieb, der dazu ausgebildet ist, eine Bewegung der Greiferhalterung (8, 20) zu bewirken.

2. Vorrichtung nach Anspruch 1, **dadurch gekennzeichnet, dass** die Bewegungsbahn einen einzigen Freiheitsgrad aufweist.

3. Vorrichtung nach Anspruch 1 oder 2, **dadurch gekennzeichnet, dass** der Greiferhalterungsantrieb einen einzigen Motor aufweist.

4. Vorrichtung nach einem der vorhergehenden Ansprüche, **gekennzeichnet durch** Greiferbetätigungsmittel (17, 18), die dazu ausgebildet sind, eine Betätigung des Greifers (6) in Abhängigkeit von einer Bewegung der Greiferhalterung (8, 20) zu bewirken.

5. Vorrichtung nach einem der vorhergehenden Ansprüche, **dadurch gekennzeichnet, dass** die Bewegungsbahn an mindestens einem ihrer Enden eine vertikale Komponente aufweist.

6. Vorrichtung nach einem der vorhergehenden Ansprüche, **dadurch gekennzeichnet, dass** die Bewegungsbahn an mindestens einem ihrer Enden eine horizontale Komponente aufweist.

7. Vorrichtung nach Anspruch 6, **gekennzeichnet durch** einen Antrieb, der dazu ausgebildet ist, die Startposition (1) und/oder die Zielposition (4) des Probenbehälters (3) zum Ausgleich der horizontalen Komponente der Bewegungsbahn zu verändern.

8. Vorrichtung nach einem der vorhergehenden Ansprüche, bei der die Bewegungsbahnfestlegungsmittel eine Führungsschiene (9) aufweisen.

9. Vorrichtung nach einem der vorhergehenden Ansprüche, bei der die Bewegungsbahnfestlegungsmittel eine Vorrichtung von mechanisch gekoppelten Lenkern (12, 13) aufweisen.

10. Vorrichtung nach einem der vorhergehenden Ansprüche, bei der der Greifer (6) zum Greifen mehrerer Probenbehälter (3) ausgebildet ist.
